# EUROPEAN PATENT APPLICATION

(11) **EP 2 236 253 A1**
(43) Date of publication of application: **06.10.2010**
(21) Application number: 09164623.2
(22) Date of filing: 06.07.2009
(51) Int. Cl.: B25J 15/06, B25B 11/00, B65G 47/91, B65H 3/08, B66C 1/02

(54) **Device for gripping an object by suction**

(30) Priority: 30.03.2009 EP 09156680
(71) Applicant: van Sorgen, Carel Johannes Wilhelm Theodoor, 7101 BN Winterswijk (NL)
(72) Inventor: van Sorgen, Carel Johannes Wilhelm Theodoor, 7101 BN Winterswijk (NL)
(74) Representative: 't Jong, Bastiaan Jacob

(57) **Abstract**

The invention relates to a device for gripping an object by suction, which device comprises:
- a permeable support plate;
- a layer of flexible material arranged on the support plate;
- a low pressure chamber arranged on the support plate at the opposite side of the layer of flexible material,
wherein the layer of flexible material is of a non permeable material, which layer is provided with a plurality of cracks or holes formed by pins, needles or a pulsed laser beam running from one surface towards the opposite surface.

## Description

The invention relates to a device for gripping an object by suction.

Such a device is for example used for picking up sheet like parts, like steel plates or cardboard. The suction device generally comprises some kind of suction mouth, which is connected to a low pressure source. Low pressure is understood to be a pressure well below the ambient pressure.

When an object is brought in contact with the suction mouth, this suction mouth is closed off and the object is sucked against the suction mouth as a result of the pressure difference between the low pressure source and the ambient pressure.

However, when the suction mouth is closed off only partially a large low pressure flow is necessary to still grip an object. To resolve this problem, it is known in the prior art to provide a number of discrete suction mouths, each of which is provided with a restriction valve. If the flow through this valve passes a certain limit, the valve is closed off. So, when a suction mouth is not closed off, the flow will be large through this suction mouth, such that the valve will be closed. Although this solution reduces the consumption of low pressure, it is still necessary to have initially a large flow to be able to activate the valves of the suction mouths, which are not closed off. This requires large pumps.

Furthermore, the arrangement of a valve per suction mouth increases the costs.

DE-A-10245716 describes a device for gripping an object by suction. This device comprises a body which is provided with a plurality of valves connected to a low pressure source. A suction plate is arranged to the body, which suction plate is lined with a flexible layer. This suction plate and flexible layer is provided with holes corresponding to the valves in the body.

In this prior art document it is described that when gripping an object by suction, the walls of the holes can collapse due to the pressure. In this prior art, this collapsing is prevented by inserting support elements in the holes. These support elements can be a open-cell foam or spring elements.

It is clear, that the prior art is of the opinion, that the holes in the suction plate should be kept open as well as possible.

The disadvantage of all the known prior art, is that large low pressure pumps are necessary to be able to pick up parts, which only partially close off the suction mouths. The usage of low pressure is reduced by introducing valves in the openings, but these valves do increase the costs of the device.

It is now an object of the invention to provide a device according to the preamble, which reduces or eliminates the above mentioned disadvantages.
- a permeable support plate;
- a low pressure chamber arranged on the support plate, wherein the permeable support plate is provided with pinpoint holes; and
- a layer of flexible material arranged on the support plate;

This object is achieved with a device comprising:
- a permeable support plate;
- a low pressure chamber arranged on the support plate wherein the permeable support plate is provided with pinpoint holes;

It has turned out, that with a device according to the preamble, the volume of low pressure can be reduced considerably, such that smaller pumps can be used and that there is no need to provide special valves.

This is achieved by providing pinpoint holes in the support plate. Due to the size of these pinpoint holes, which are typically 0.01 - 1 mm, preferably 0.01 - 0.1 mm, the holes function as restrictions, which restrict the air flow. However for lifting an object, only the pressure difference is relevant.

In a preferred embodiment of the device according to the invention the permeable support plate comprises a rigid plate and a layer of flexible material arranged to the rigid plate, at the opposite side of the low pressure chamber, wherein the layer of flexible material is of a non permeable material, which layer is provided with a plurality of cracks, providing the pinpoint holes, running from one surface towards the opposite surface and wherein the rigid plate is provided with similar sized or larger holes.

The cracks are normally closed, but only by providing a sufficient pressure difference a small flow of air will occur through these cracks. When a surface of an object is pressed against the crack, the air between the surface of the object and the flexible material is sucked away through this crack and the pressure difference will provide the force with which the object is pressed against the device. The air flow through the other, not closed off cracks is still very minimal, such that the overall consumption of air is kept small, while still a firm grip is achieved on the objects.

In an embodiment of the device according to the invention, the permeable support plate is provided with a plurality of holes. Preferably each crack is arranged in line with one of the plurality of holes. This makes sure, that at least through each crack air can be sucked away and that the crack is not blocked by the support plate.

In a preferred embodiment of the invention the cracks are straight and run perpendicular between the two surfaces. This embodiment is preferred out of manufacturing view point. The cracks can simply be provided in the layer of flexible material by piercing the material with needles.

In yet another preferred embodiment of the device according to the invention the cracks are straight and the angle between the cracks and the two surfaces is smaller than 90°. Although slightly more difficult to manufacture, this embodiment has the advantage, that when the flexible material is compressed due to the pressure difference between the low pressure chamber and the ambient pressure, the cracks are pressed closed as a result. The compression of the material will generally be perpendicular to the support plate. As the cracks run under an angle to this support plate, they will be pressed closed as a result.

In yet another embodiment the flexible material is a closed-cell foam.

The characteristics of the used flexible layer will influence the effectiveness of the device. When using for example a closed-cell foam, the firmness of the foam will influence the amount of air sucked through the cracks. A very firm foam will press the cracks closed better, than a soft foam. Also the size of the cracks will influence the 'valve'-like action of the flexible layer.

It should however be clear that the gist of the invention lies in the use of a flexible layer, which is impermeable in rest position, i.e. when no pressure difference is present. Only after providing a pressure difference over the flexible layer, the cracks open up making the flexible layer permeable. These cracks stay open as long as a pressure difference is present. The amount of air pass through of the cracks, i.e. the 'valve'-like action, is determined by the characteristics of the foam.

In still another embodiment of the device according to the invention the low pressure chamber is enclosed by walls, one of the walls comprising the permeable support plate. These walls provide an enclosure, or dome at the support plate, such that the low pressure is distributed evenly over the permeable support plate.

It is preferred that support ribs are arranged in the low pressure chamber. These support ribs provide strength to the walls, such that the wall can be relatively thin and will not collapse due to the low pressure in the chamber.

The low pressure in the chamber can be generated by connecting a compressor or pump to the low pressure chamber.

Another preferred feature of the invention is a second layer of flexible material arranged on the first layer of flexible, non permeable material, wherein the second layer comprises a plurality of holes. This second layer provides a means to account for unevennesses of the surface of the object, which is gripped by the invention. The firmness of the second layer could for example be lower than the firmness of the second layer, such that the second layer adapts itself to the surface of the object, while the first layer is firm enough to provide the required 'valve'-action.

Preferably, the plurality of holes in the second layer are aligned with the plurality of cracks in the first layer.The invention further comprises a method for manufacturing a device according to the invention, wherein the method comprising the steps of:
- providing a permeable support plate;
- providing a low pressure chamber on one side of the permeable support plate;
- arranging a layer of non permeable, flexible material on the second opposite side of the permeable support plate;
- stabbing the flexible material with at least a pin to create cracks in the flexible material.

A simple and reliable embodiment of the at least one pin is a needle.

Preferably the permeable support plate is provided with a plurality of holes and wherein a plate with a plurality of pins, aligned with the plurality of holes in the support plate is used for stabbing the flexible material. This enables the pins to stab through the flexible material and into the holes of the support plate, such that it is ensured, that the provided cracks run through from one surface to the opposite surface.

In yet another embodiment a method is provided, which the method comprises the steps of:
- providing a permeable support plate;
- providing a low pressure chamber on one side of the premeable support plate
- arranging pinpoint holes in the permeable support plate with a pulsed laser beam.

Very small holes can be provided in for example a steel plate by using a pulsed laser beam. As a result of the pulsing, a hole is created, while the heat transfer from the laser beam to the steel plate is limited.

These and other features of the invention will be elucidated in conjunction with the accompanying drawings.
Figure 1 shows a cross sectional view of a first embodiment of the device according to the invention.
Figure 2 shows the embodiment of figure 1 in perspective view above a sheet metal plate.
Figure 3 shows the device according to figure 1 while holding a plate part by suction.
Figure 4 shows the method for manufacturing the device according to figure 1.
Figure 5 shows a second embodiment of the invention in cross sectional view.
Figure 6 shows a third embodiment of the invention in cross sectional view.
Figure 7 shows a fourth embodiment of the invention in cross sectional view.

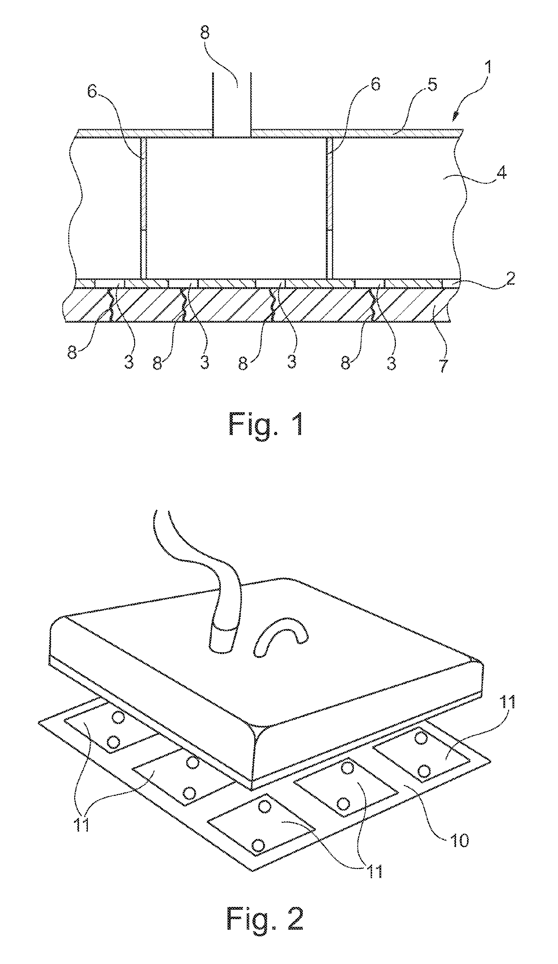

In figure 1 a first embodiment 1 of the invention is shown. This embodiment 1 has a permeable support plate 2, in which a number of holes 3 is arranged. On the upper surface of the support plate 2, a low pressure chamber 4 is arranged. This low pressure chamber is enveloped by the support plate 2 and walls 5. Between the upper wall 5 and the support plate 2 some support ribs 6 are arranged to prevent the low pressure chamber 4 from collapsing. At the top of the chamber 4 a connection 9 is arranged for connecting the chamber 4 with a low pressure pump or compressor.

At the bottom surface of the support plate 2 a layer 7 of flexible material is arranged. This flexible material is itself not permeable. However, cracks 8 are arranged in the flexible material 7, which cracks run from one surface to the opposite surface.

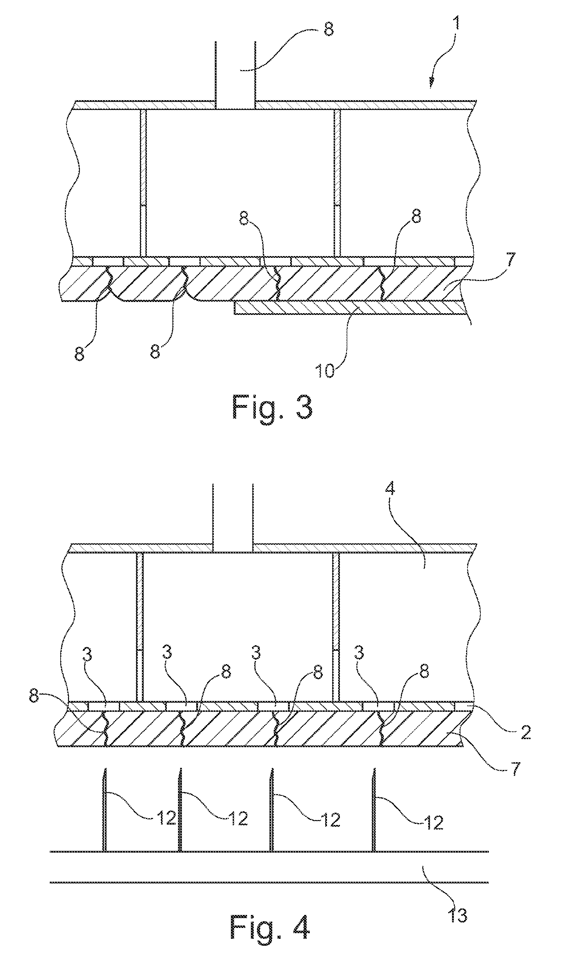

In figure 2, the device 1 is shown hanging over a sheet metal plate 10 out of which parts 11 are cut out. The device 1 is lowered onto the sheet metal plate 10, such that the flexible material 7 is in contact with the plate 10. After arranging the low pressure in the chamber 4, the plate parts 11 and the sheet metal plate 10 are sucked against the flexible material 7, as shown in figure 3.

The cracks 8 not being covered by the sheet metal plate 10, will be pressed inwardly as a result of the pressure difference between the low pressure chamber 4 and the ambient pressure.

In figure 4 is shown a method to provide the cracks 8 in the layer of flexible material 7. After providing a low pressure chamber 4, comprising a support plate 2 on which a layer of non permeable flexible material is arranged, the flexible material is pierced by a number of needles 12. These needles 12 are arranged on a support base 13 and the position of the needles 12 correspond to the position of the holes 3 in the support plate 2.

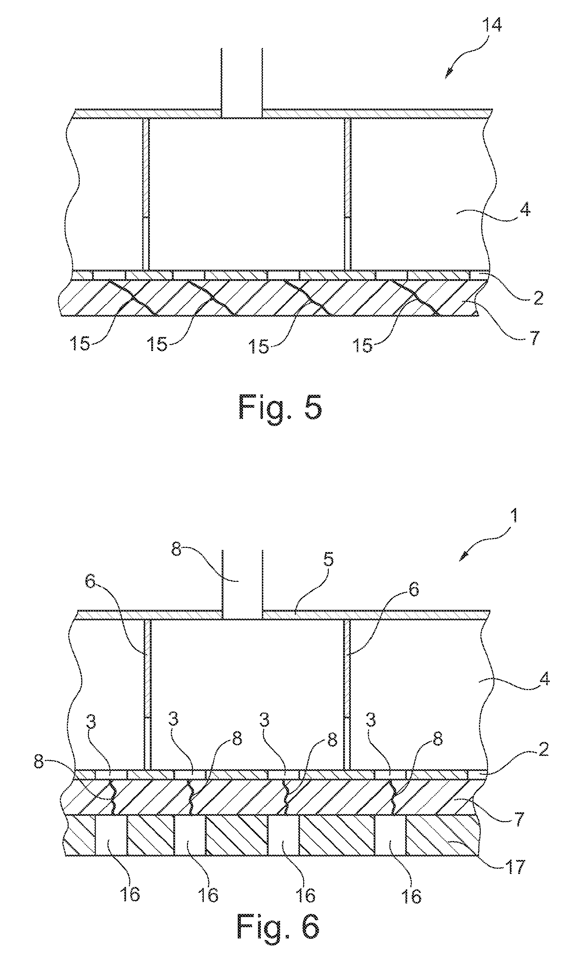

In figure 5 a second embodiment 14 of the invention is shown. This embodiment corresponds largely to the embodiment 1 of figure 1.

The embodiment 14 also comprises a low pressure chamber 4, a permeable support plate 2 and a layer of non permeable, flexible material 7.

In this embodiment 14, the cracks 15 are arranged under an angle smaller than 90° with the surface of the support plate 2. When the cracks 15 are not covered by an object and are sucked inward, similar to what is shown in figure 3, the cracks 15 are pressed closed, such that the leakage is further reduced.

In figure 6 a third embodiment of the invention is shown. This embodiment corresponds largely with the embodiment according to figure 1. The same features are provided with the same reference numerals.

On the layer of flexible material 7, which is preferably a closed-cell foam, a second layer of flexible material 17 is arranged. In this layer of flexible material 17 a plurality of holes 16 are arranged, which holes 16 are aligned with the cracks 8. This second layer of flexible material 17 is used to account for unevennesses in the contact surface with the object.

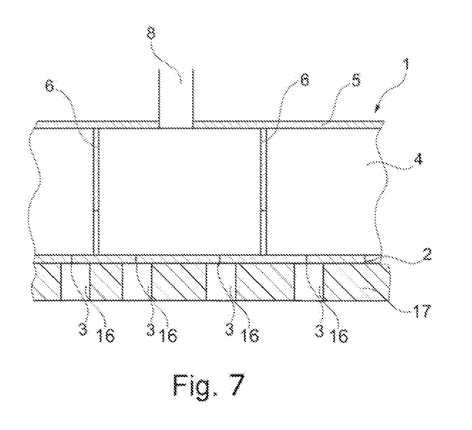

Figure 7 show a cross sectional view of a fourth embodiment, which corresponds largely with the embodiment according to figure 6. The functionality of the support plate 2 and layer of flexible material 7 is combined in the support plate 2. The holes 3 are made by for example a pulsed laser resulting in such small holes, that the functions of the support plate 2 and flexible material 7 can be combined.

Although the invention is described in the examples as a device for picking up sheet-like material, the device can be used to pick up any object having at least a substantially flat surface. In particular boxes, such as sheet metal boxes or cardboard boxes can be picked up.

## Claims

1. Device for gripping an object by suction, which device comprises:
- a permeable support plate;
- a low pressure chamber arranged on the support plate, wherein the permeable support plate is provided with pinpoint holes

2. Device according to claim 1, wherein the permeable support plate comprises a rigid plate and a layer of flexible material arranged to the rigid plate, at the opposite side of the low pressure chamber, wherein the layer of flexible material is of a non permeable material, which layer is provided with a plurality of cracks, providing the pinpoint holes, running from one surface towards the opposite surface and wherein the rigid plate is provided with similar sized or larger holes.

3. Device according to claim 2, wherein each crack is arranged in line with one of the plurality of holes.

4. Device according to any of the preceding claims, wherein the cracks are straight and run perpendicular between the two surfaces.

5. Device according to any of the claims 1 - 3, wherein the cracks are straight and wherein the angle between the cracks and the two surfaces is smaller than 90°.

6. Device according to any of the preceding claims, wherein the flexible material is a closed-cell foam.

7. Device according to any of the preceding claims, wherein the low pressure chamber is enclosed by walls, one of the walls comprising the permeable support plate.

8. Device according to claim 7, wherein support ribs are arranged in the low pressure chamber.

9. Device according to any of the preceding claims, comprising a compressor connected to the low pressure chamber.

10. Device according to any of the preceding claims, comprising a second layer of flexible, non permeable material arranged on the first layer of flexible material, wherein the second layer comprises a plurality of holes.

11. Device according to claim 10, wherein the plurality of holes in the second layer are aligned with the plurality of cracks in the first layer.

12. Method for manufacturing a device according to any of the preceding claims, the method comprising the steps of:
- providing a permeable support plate;
- providing a low pressure chamber on one side of the permeable support plate;
- arranging a layer of non permeable, flexible material on the second opposite side of the permeable support plate;
- stabbing the flexible material with at least a pin to create cracks in the flexible material.

13. Method according to claim 12, wherein the at least pin is a needle.

14. Method according to claim 12 or claim 13, wherein the permeable support plate is provided with a plurality of holes and wherein a plate with a plurality of pins, aligned with the plurality of holes in the support plate is used for stabbing the flexible material.

15. Method for manufacturing a device according to claim 1, the method comprising the steps of:
- providing a permeable support plate;
- providing a low pressure chamber on one side of the permeable support plate; and
- arranging pinpoint holes in the permeable support plate with a pulsed laser beam.
